# EUROPEAN PATENT SPECIFICATION

(11) **EP 1 474 981 B1**
(45) Date of publication and mention of the grant of the patent: **01.02.2006**
(21) Application number: 04250850.7
(22) Date of filing: 18.02.2004
(51) Int. Cl.: A21B 7/00

(54) **Improvements in and relating to bread makers**
Verbesserungen an Brotbackmaschinen
Améliorations apportées aux machines de fabrication de pain

(30) Priority: 07.05.2003 KR 2003029087
(43) Date of publication of application: 10.11.2004
(73) Proprietor: SAMSUNG ELECTRONICS CO., LTD., Suwon-si, Gyeonggi-do (KR)
(72) Inventor: Sung, Han-jun, Jugong Apt. No. 909-202, Suwon city, Kyungki-do (KR); Kwon, Yong-hyun, Daewoo Apt. No. 301-203, Suwon city, Kyungki-do (KR); Kim, Chul, Kummaeul Apt. 607-404, Anyang city, Kyungki-do (KR); Lee, Tae-uk, Daesung villa No. 201, Suwon city, Kyungki-do (KR); Park, Jae-ryong, Jugong Apt. No. 401-1603, Suwon city, Kyungki-do (KR); Lee, Jang-woo, No. 201, Suwon city, Kyungki-do (KR); Lim, Dong-bin, Jugong Apt. No. 914-1103, Suwon city, Kyungki-do (KR)
(74) Representative: Brandon, Paul Laurence

(56) References cited:
- EP-A- 1 382 254
- WO-A-99/25467

## Description

The present invention relates to bread makers and to baking trays for bread makers, and, more particularly, but not exclusively, to bread makers and baking trays for bread makers in which noise generated between a movable tray and a stationary tray is reduced.

Generally, making bread can be complicated. Thus, bread makers have been developed that automatically perform multiple steps such as mixing ingredients to form a dough, and kneading, leavening, and baking the dough to make bread.

Typically, a conventional bread maker in which dough is kneaded by reciprocating a mixing bag up and down includes a main body having an oven compartment, and a pair of parallel kneading drums that are rotatably disposed in upper and lower parts of the oven compartment to wind opposite ends of the mixing bag, filled with ingredients for bread, in clockwise and counterclockwise directions .

In a lower part of the oven compartment is a baking tray that slides out of the oven compartment and contains dough as it is being kneaded between the upper and lower kneading drums.

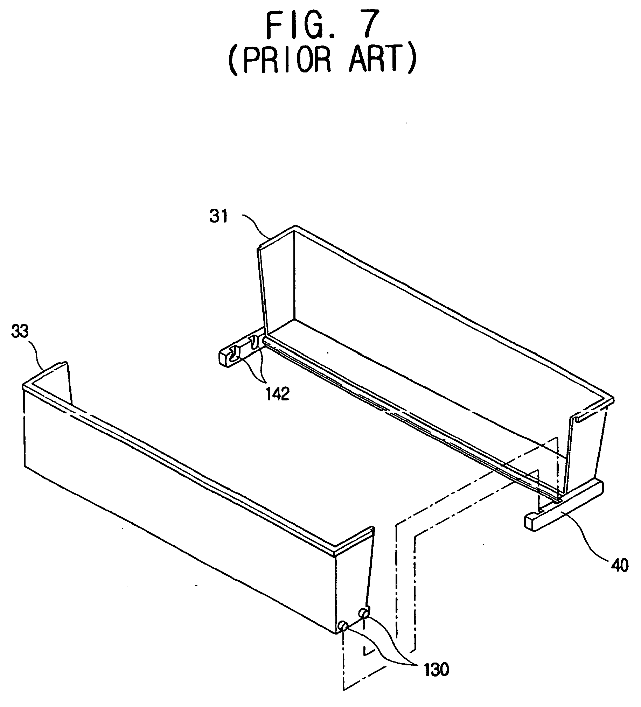

As shown in FIG. 7, the conventional bread maker includes tray holders 40 that are respectively placed in lower parts of opposing sidewalls of a stationary tray 31, and slidingly coupled with a guide (not shown) mounted on the oven compartment. A plurality of groove parts 142 are formed in the tray holders 40.

In lower parts of opposing sidewalls of a movable tray 33 are a plurality of projections 130 that project respectively from surfaces of the opposing sidewalls of the movable tray 33, and are accommodated in the groove parts 142 of the tray holders 40.

As the mixing bag reciprocate s up and down, the movable tray 33 strikes the stationary tray 31, generating a noise.

A bread maker needs to operate with little noise generated because the bread maker is usually used at home. The bread maker of the present invention satisfies this requirement.

It is an aim of preferred embodiments of the present invention to provide a bread maker in which noise generated between a movable tray and a stationary tray is reduced.

According to the present invention, there is provided a bread maker including a main body forming an oven compartment; kneading drums spaced apart from each other in an upper part and a lower part of the oven compartment that hold opposite ends of a mixing bag containing bread ingredients, respectively; a stationary tray disposed between the kneading drums; a movable tray facing the stationary tray to form a slit through which the mixing bag passes; tray holders respectively attached to ends of the stationary tray to support the movable tray; pivot pins respectively mounted on ends of the movable tray and accommodated by the tray holders, the movable tray alternately rotating between an open state, in which the movable tray is spaced apart from the stationary tray, and a closed state, in which the movable tray is adjacent to the stationary tray; and stopping pins respectively mounted on the ends of the movable tray and accommodated by the tray holders to maintain a predetermined gap between the stationary tray and the movable tray when the movable tray closes.

Suitably, the stopping pins are made of an elastic material.

Suitably, each of the stopping pins includes a stationary part securely coupled to the movable tray, and a shock-absorbing part made of an elastic material, which is coupled with the movable part and contacts the respective tray holder.

Suitably, the bread maker further includes pivot pin guide grooves respectively formed in the tray holders to accommodate the pivot pins, and stopping pin guide grooves respectively formed in the tray holders to accommodate the stopping pins, wherein the pivot pins and the stopping pins are each located at a same height from a bottom of the movable tray, and a bottom of each stopping pin guide groove is higher than a bottom of each pivot pin guide groove.

Suitably, the bread maker further includes pivot pin guide grooves respectively formed in the tray holders to accommodate the pivot pins, and stopping pin guide grooves respectively formed in the tray holders to accommodate the stopping pins. Suitably, the pivot pins and the stopping pins are each located at a same height from a bottom of the movable tray, bottoms of the stopping pin guide grooves and the pivot pin guide grooves are located at a same height from a bottom of the respective tray holders, and the stopping pins are accommodated in the stopping pin guide grooves a distance from the bottoms of the stopping pin guide grooves when the movable tray is closed.

According to the present invention, there is provided a baking tray for a bread maker having kneading drums, including a stationary tray between the kneading drums; cray holders respectively attached to ends of the stationary tray; a movable tray rotatably mounted on the tray holders; pivot pins respectively mounted on ends of the movable tray and accommodated by the tray holders, the movable tray alternately rotating between an open state, in which the movable tray is spaced apart from the stationary tray, and a closed state, in which the movable tray is adjacent to the stationary tray; and stopping pins respectively mounted on the ends of the movable tray and accommodated by the tray holders to maintain a predetermined gap between the stationary tray and the movable tray when the movable tray closes.

Further features of the present invention are set out in the appended claims.

The invention will become apparent and more readily appreciated from the following description of the preferred embodiments, taken in conjunction with the accompanying drawings, of which:
FIG. 1 is a perspective view illustrating a bread maker according to an embodiment of the present invention;
FIG. 2 is an enlarged perspective view of a section of a baking tray of the bread maker of FIG. 1;
FIGS. 3 through 5 are sectional views of the baking tray of the bread maker of FIG. 1 during a kneading process, taken along line I-I in FIG. 1;
FIG. 6A is an enlarged perspective view of a stopping pin of the bread maker of FIG. 1;
FIG. 6B is an exploded perspective view of the stopping pin of the bread maker of FIG. 1; and
FIG. 7 is an exploded perspective view of a baking tray of a conventional bread maker.

Hereinafter, embodiments of the present invention will be described in detail with reference to the attached drawings, wherein the like reference numerals refer to the like elements throughout. The present invention may, however, be embodied in many different forms and should not be construed as being limited to the embodiments set forth herein. Rather, these embodiments are provided so that the present disclosure will be thorough and complete, and will fully convey the concept of the invention to those skilled in the art.

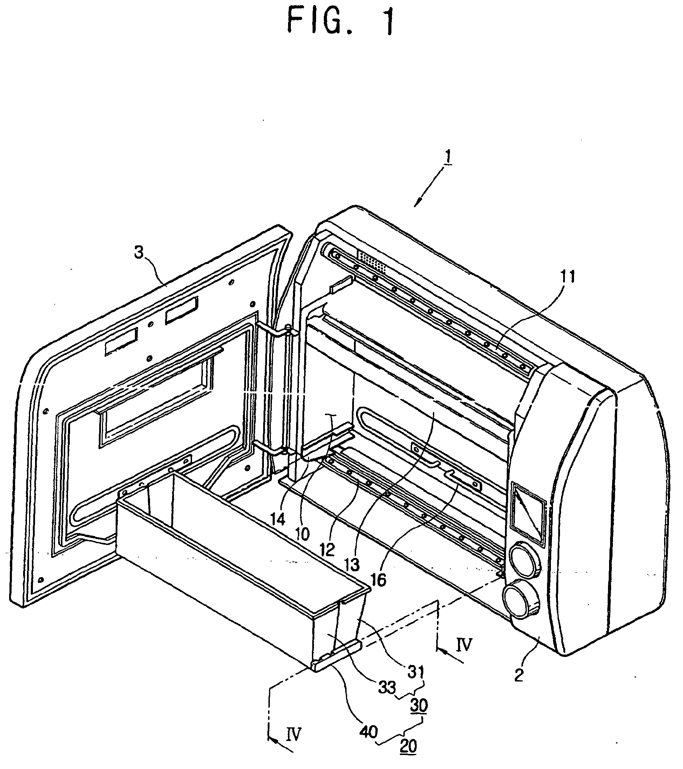

As shown in FIG. 1, a bread maker according to an embodiment of the present invention includes a main body 1 provided with an oven compartment 10, a door 3 in the front of the main body 1 to rotatably open and close a front opening of the oven compartment 10, and an operation display panel 2 in a front side of the main body 1 to display an operation state of the main body 1.

In upper and lower parts inside the oven compartment 10 are an upper kneading drum 11 and a lower kneading drum 12, which are disposed in parallel to wind upper and lower ends of a mixing bag 50 filled with bread ingredients in clockwise and counterclockwise directions. Between the upper kneading drum 11 and the lower kneading drum 12 is a pair of dough-blocking members 13 that prevent the dough kneaded in the mixing bag 50 from moving toward the upper kneading drum 11.

A baking tray assembly 20 includes a baking tray 30 and the tray holders 40. In the lower part of the oven compartment 10, the baking tray 30, which can be slid out of the oven compartment 10 and contains kneaded ingredients for the bread therein, is provided between the upper kneading drum 11 and the lower kneading drum 12.

The baking tray 30 has a box shape with a top opening that is formed by combining a stationary tray 31 and a movable tray 33, both having an "L" shape and being symmetrical to each other. A slit is formed at the bottom of the baking tray 30 where the stationary tray 31 and the movable tray 33 join.

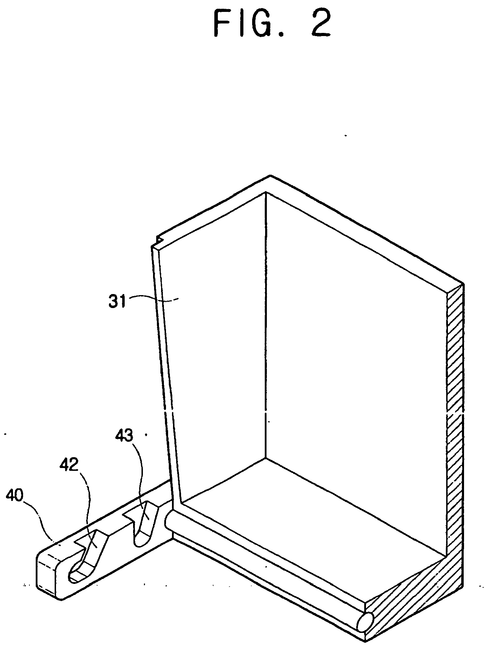

As shown in FIGS. 2 through 4, in lower parts of opposite sidewalls of the stationary tray 31, stationary projections 32, which are securely combined with the pair of tray holders 40, project from surfaces of the opposite sidewalls of the stationary tray 31. In lower parts of opposite sidewalls of the movable tray 33, pivot pins 34 and stopping pins 35 project from surfaces of the opposite sidewalls of the movable tray 33.

As shown in FIGS. 2 through 5, the tray holders 40 are respectively slidingly coupled with guide members 14 (FIG. 1) mounted on opposite sidewalls of the interior of the oven compartment 10 such that the guide members 14 face each other. Stationary projection accommodating parts 41, in which the stationary projections 32 of the stationary tray 31 are inserted, form grooves in the tray holders 40. Pivot pin guide grooves 42 and stopping pin guide grooves 43, in which the pivot pins 34 and the stopping pins 35 of the movable tray 33 are respectively accommodated, are respectively formed in the tray holders 40.

If the stationary projections 32 of the stationary tray 31 are inserted in the stationary projection-accommodating parts 41 of the tray holders 40, the stationary tray 31 is securely mounted on the tray holders 40. The pivot pins 34 of the movable tray 33 are respectively accommodated in the pivot pin guide grooves 42 of the tray holders 40, so that the movable tray 33 can alternately rotate between an open state, in which the movable tray 33 is positioned apart from the stationary tray 31, and a closed state, in which the movable tray 33 is positioned adjacent to the stationary tray 31. The stopping pins 35 of the movable tray 33 are respectively accommodated in the stopping guide grooves 43, so that the stopping pins 35 maintain a predetermined gap width h between the stationary tray 31 and the movable tray 33. Thus, the movable tray 33 is movably mounted on the tray holders 40.

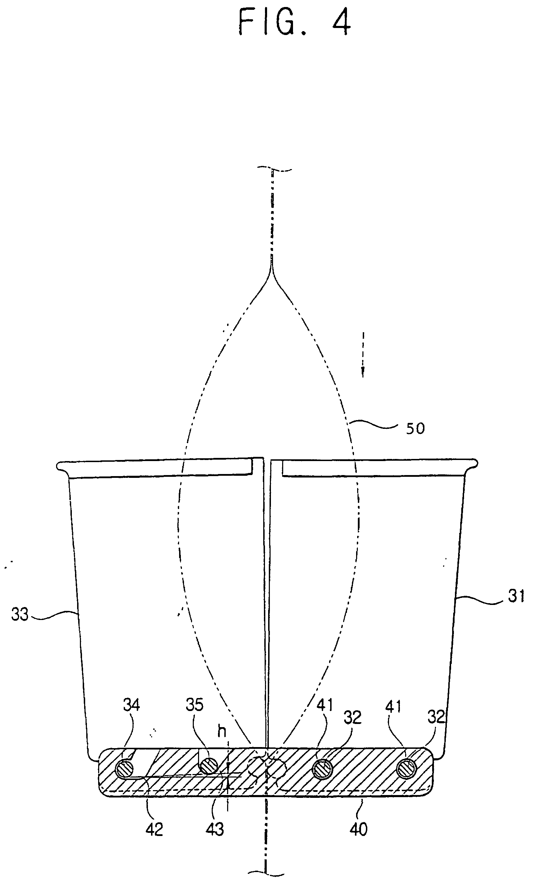

A description follows of how the stopping pins 35 set limits on the approach of the movable tray 33 toward the stationary tray 31 as the movable tray 33 closes. As shown in FIG. 4, for one end of the baking tray 30, the pivot pin 34 and the stopping pin 35 are located the same height from the bottom of the movable tray 33, but the bottom of the stopping pin guide groove 43, accommodating the stopping pin 35, is located higher than the bottom of the pivot pin guide groove 42 that accommodates the pivot pin 34.

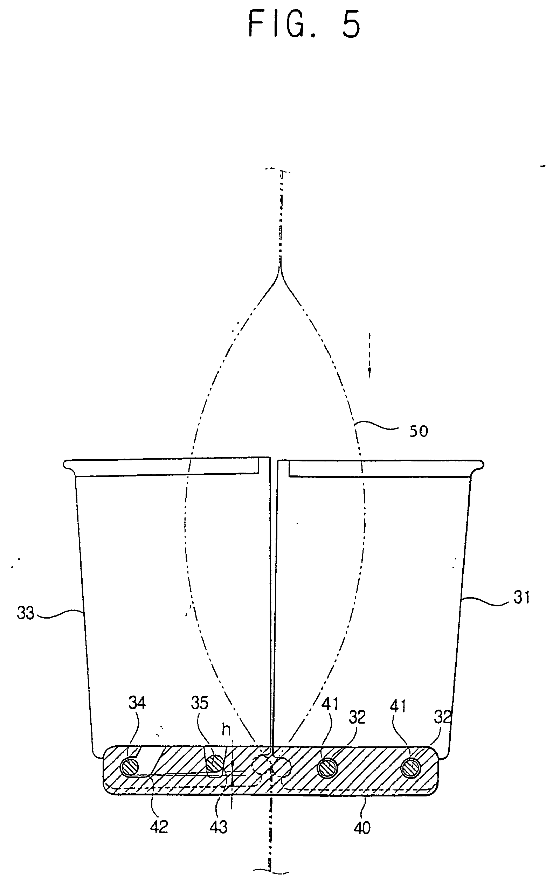

In another embodiment of the present invention, as shown in FIG. 5, the pivot pin 34 and the stopping pin 35 are located the same height from the bottom of the movable tray 33, and the bottoms of the pivot pin guide groove 42 and the stopping pin guide groove 43, respectively accommodating the pivot pin 34 and stopping pin 35, are located the same height from the lower surface of the tray holder 40. However, due to the tapering shape of the stopping pin guide groove 43 in the aspect of the invention shown in FIG. 5, in the closed state of the movable tray 33, the stopping pin 35 is spaced apart from the bottom of the stopping pin guide groove 43, which accommodates the stopping pin 35.

If the stationary tray 31 and the movable tray 33 are mounted on the tray holders 40 to face each other (i.e. the movable tray 33 is closed), the baking tray 30 having a box shape with a top opening for containing the bread ingredients is formed. Along a line where the stationary tray 31 meets the movable tray 33, a predetermined gap is formed between side edges of the stationary tray 31 and the movable tray 33, forming a slit 21 along the bottom of the baking tray 30.

During the mixing and kneading operation, one end of the mixing bag 50 contained inside the oven compartment 10 is wound onto the upper kneading drum 11. Then, the other end of the mixing bag 50 passes through the pair of dough-blocking members 13 and the slit 21 formed at the bottom of the baking tray 30 and is wound onto the lower kneading drum 12. The mixing bag 50 filled with bread ingredients is reciprocated up and down by the upper kneading drum 11 and the lower kneading drum 12 during the kneading process, so that the bread ingredients are kneaded between the pair of dough-blocking members 13 and the baking tray 30.

After completing the kneading process, the mixing bag 50 is released from the upper kneading drum 11 by rotation of only the lower kneading drum 12. Then, the mixing bag 50 passes through the pair of dough-blocking members 13 and the slit 21 formed at the bottom of the baking tray 30. When the mixing bag 50 passes through the slit 21 of the baking tray 30, the bread dough contained in the mixing bag 50 cannot pass the slit 21 of the baking tray 30, so the dough is separated from the mixing bag 50 and contained in the baking tray 30. However, the mixing bag 50 continues to pass through the slit 21 of the baking tray 30 and is wound onto the lower kneading drum 12. Thereafter, the bread dough contained in the baking tray 30 is baked by a baking heater 16 in the oven compartment 10.

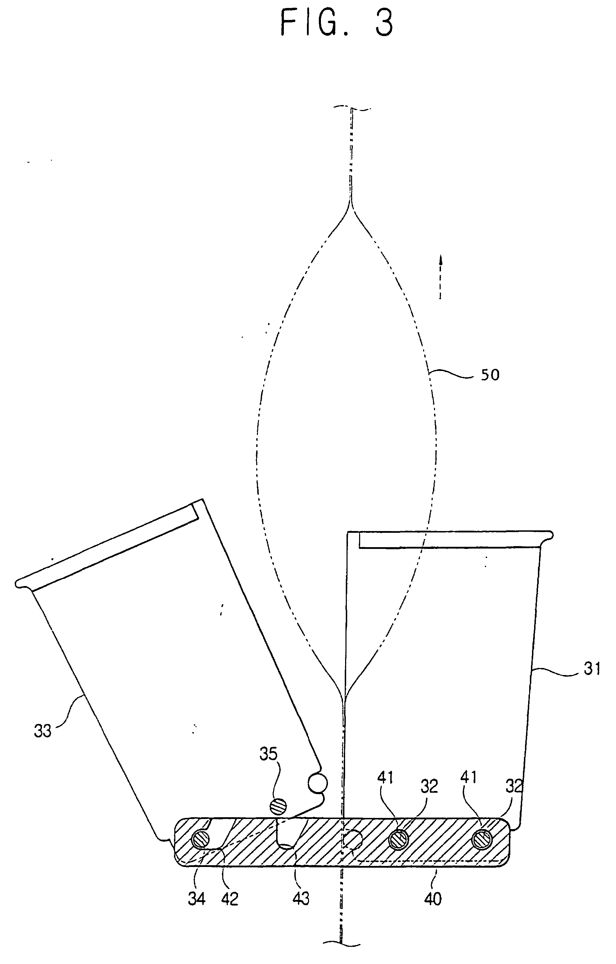

As shown in FIGS. 3 and 4, as the mixing bag 50 filled with the bread ingredients reciprocates up and down with the lower end of the mixing bag 50 passing through the slit 21 formed between the stationary tray 31 and the movable tray 33 during the kneading process, the movable tray 33 alternates between the open and closed states because the movable tray 33 is movably mounted on the tray holders 40.

As the mixing bag 50 moves upward through the slit 21 the movable tray 33 rotates counterclockwise, as shown in FIG. 3, with the mixing bag 50, which also raises the stopping pins 35. Thus, the open state is formed between the stationary tray 31 and the movable tray 33. In contrast, as the mixing bag 50 moves downward, the movable tray 33 rotates clockwise with the mixing bag 50. Therefore, the stopping pins 35 are respectively accommodated in the stopping pin guide grooves 43, forming the closed state between the stationary tray 31 and the movable tray 33, as shown in FIG. 4.

When the movable tray 33 is closed, the stopping pin 35 is accommodated in the stopping pin guide groove 43, so that a predetermined gap is formed between side edges of the stationary tray 31 and the movable tray 33. Thus, when the movable tray 33 closes, the stopping pins 35 prevent the movable tray 33 from forcefully striking the side edge of the stationary tray 31. Accordingly, direct contact between the stationary tray 31 and the movable tray 33 is prevented.

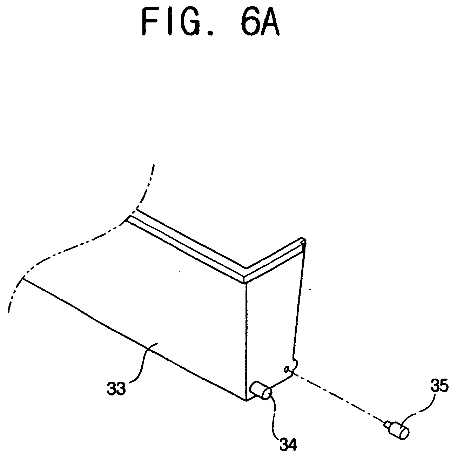

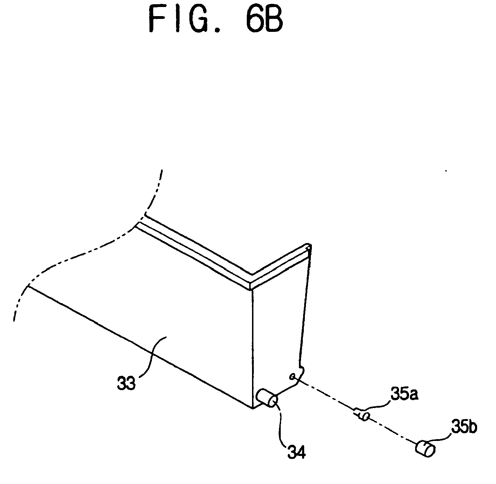

As shown in FIG. 6A, if the stopping pins 35 are made of materials having elasticity, then noise generated when the stopping pins 35 are accommodated in the stopping pin guide grooves 43 of the movable trays 33 can be reduced as the movable tray 33 rotates downward.

As shown in FIG. 6B, the stopping pin 35 may be divided into a stationary part 35a that is securely coupled with the movable tray 33, and a shock-absorbing part 35b having elasticity, which is connected to the stationary part 35a and accommodated in the stopping pin guide groove 43.

The materials having elasticity are made of a heat-resistant material, such as Teflon® or heat-resistant rubber.

As described above, according to preferred embodiments of the present invention, the noise generated as the movable tray 33 combines with the stationary tray 31 is reduced, so that the kneading process is quietly performed.

Although a few embodiments of the present invention have been shown and described, it will be appreciated by those skilled in the art that changes may be made in these embodiments without departing from the principles and spirit of the invention, the scope of which is defined in the appended claims.

## Claims

1. A bread maker comprising:
a main body (1) forming an oven compartment (10);
kneading drums (11, 12) spaced apart from each other in an upper part and a lower part of the oven compartment (10) that hold opposite ends of a mixing bag (50) containing bread ingredients, respectively;
a stationary tray (31) disposed between the kneading drums (11, 12); a movable tray (33) facing the stationary tray (31) to form a slit through which the mixing bag (50) passes;
tray holders (40) respectively attached to ends of the stationary tray (31) to support the movable tray (33); pivot pins (34) respectively mounted on ends of the movable tray (33) and accommodated by the tray holders (40), the movable tray (33) alternately rotating between an open state, in which the movable tray (33) is spaced apart from the stationary tray (31), and a closed state, in which the movable tray (33) is adjacent to the stationary tray (31); and
stopping pins (35) respectively mounted on the ends of the movable tray (33) and accommodated by the tray holders (40) to maintain a predetermined gap between the stationary tray (31) and the movable tray (33) when the movable tray (33) closes.

2. The bread maker according to claim 1, wherein the stopping pins (35) are made of an elastic material.

3. The bread maker according to claim 1 or claim 2, wherein each of the stopping pins (35) comprises a stationary part (35a) securely coupled to the movable tray (33), and a shock-absorbing part (35b) made of an elastic material, which is coupled with the stationary part (35a) and contacts the respective tray holder (40).

4. The bread maker according to any preceding claim, further comprising pivot pin guide grooves (42) respectively formed in the tray holders (40) to accommodate the pivot pins (34), and stopping pin guide grooves (43) respectively formed in the tray holders (40) to accommodate the stopping pins (35), wherein the pivot pins (34) and the stopping pins (35) are each located at a same height from a bottom of the movable tray (33), and a bottom of each stopping pin guide groove (43) is higher than a bottom of each pivot pin guide groove (42).

5. The bread maker according to any one of claims 1-3, further comprising pivot pin guide grooves (42) respectively formed in the tray holders (40) to accommodate the pivot pins (34), and stopping pin guide grooves (43) respectively formed in the tray holders (40) to accommodate the stopping pins (35), wherein the pivot pins (34) and the stopping pins (35) are each located at a same height from a bottom of the movable tray (33), bottoms of the stopping pin guide grooves (43) and the pivot pin guide grooves (42) are located at a same height from a bottom of the respective tray holders (40), and the stopping pins (35) are accommodated in the stopping pin guide grooves (43) a distance from the bottoms of the stopping pin guide grooves (43) when the movable tray (33) is closed.

6. The bread maker according to claim 4 or claim 5, wherein when the movable tray (33) closes, the stopping pins (35) join with the stopping pin guide grooves (43) to prevent direct contact between the stationary tray (31) and the movable tray (33).

7. The bread maker according to claim 5, wherein the stopping pin guide grooves (43) are tapered with the bottoms of the stopping pin guide grooves (43) being narrower than tops thereof, and wherein when the movable tray (33) closes, the stopping pins (35) join with the stopping pin guide grooves (43) to prevent direct contact between the stationary tray (31) and the movable tray (33).

8. The bread maker according to claim 2, wherein the stopping pins (35) are made of a heat-resistant rubber.

9. A baking tray (30) for a bread maker having kneading drums (11, 12), comprising:
a stationary tray (31) between the kneading drums (11, 12);
tray holders (40) respectively attached to ends of the stationary tray (31) ;
a movable tray (33) rotatably mounted on the tray holders (40);
pivot pins (34) respectively mounted on ends of the movable tray (33) and accommodated by the tray holders (40), the movable tray (33) alternately rotating between an open state, in which the movable tray (33) is spaced apart from the stationary tray (31), and a closed state, in which the movable tray (33) is adjacent to the stationary tray (31); and
stopping pins (35) respectively mounted on the ends of the movable tray (33) and accommodated by the tray holders (40) to maintain a predetermined gap between the stationary tray (31) and the movable tray (33) when the movable tray (33) closes.

10. The baking tray (30) according to claim 9, further comprising pivot pin guide grooves (42) respectively formed in the tray holders (40) to accommodate the pivot pins (34), and stopping pin guide grooves (43) respectively formed in the tray holders (40) to accommodate the stopping pins (35), wherein the pivot pins (34) and the stopping pins (35) are each located at a same height from a bottom of the movable tray (33), and a bottom of each stopping pin guide groove (43) is higher than a bottom of each pivot pin guide groove (42).

11. The baking tray according to claim 9, further comprising pivot pin guide grooves (42) respectively formed in the tray holders (40) to accommodate the pivot pins (34), and stopping pin guide grooves (43) respectively formed in the tray holders (40) to accommodate the stopping pins (35), wherein the pivot pins (34) and the stopping pins (35) are each located at a same height from a bottom of the movable tray (33), bottoms of the stopping pin guide grooves (43) and the pivot pin guide grooves (42) are located at a same height from a bottom of the respective tray holders (40), and the stopping pins (35) are accommodated in the stopping pin guide grooves (43) a distance from the bottoms of the stopping pin guide grooves (43) when the movable tray (33) is closed.

12. The baking tray according to claim 10 or claim 11, wherein when the movable tray (33) closes, the stopping pins (35) join respectively the stopping pin guide grooves (43) to prevent direct contact between the stationary tray and the movable tray.

13. The baking tray according to any one of claims 10-12, wherein the stopping pin guide grooves (43) are tapered with the bottom of each stopping pin guide groove (43) being narrower than a top thereof, and wherein when the movable tray (33) closes, the stopping pins (35) join respectively with the stopping pin guide grooves (43) to prevent direct contact between the stationary tray (31) and the movable tray (33).

14. The baking tray according to any one of claims 9-13, wherein the stopping pins (35) are made of a heat-resistant rubber.

## Patentansprüche

1. Brotbackmaschine, mit:
einem Hauptkörper (1), der eine Ofenkammer (10) ausbildet;
Knettrommeln (11, 12), die in einem oberen Teil und in einem unteren Teil der Ofenkammer (10) einen Abstand voneinander aufweisen und die jeweils einander entgegengesetzte Seiten einer Mischtasche (50) mit darin enthaltenen Brotzutaten halten;
einer zwischen den Knettrommeln (11, 12) angeordneten stationären Schale (31); eine der stationären Schale (31) gegenüberliegende bewegliche Schale (33) zur Bildung eines Spaltes, durch welchen die Mischtasche (50) hindurchtritt;
Schalenhaltern (40), die jeweils an den Seiten der stationären Schale (31) zum Tragen der beweglichen Schale (33) angebracht sind;
Schwenkstiften (34), die jeweils an den Seiten der beweglichen Schale (33) befestigt und von den Schalenhaltern (40) aufgenommen sind, wobei die bewegliche Schale (33) zwischen einem offenen Zustand, in dem die bewegliche Schale (33) einen Abstand von der stationären Schale (31) aufweist, und einem geschlossenen Zustand, in dem die bewegliche Schale (33) der stationären Schale (31) benachbart ist, hin und her gedreht wird; und
Stoppstiften (35), die an den Seiten der beweglichen Schale (33) befestigt sind und die Schalenhalter (40) aufnehmen, um einen vorbestimmten Abstand zwischen der stationären Schale (31) und der beweglichen Schale (33) aufrechtzuerhalten, wenn die bewegliche Schale (33) den geschlossenen Zustand herstellt.

2. Brotbackmaschine nach Anspruch 1,
in welcher die Stoppstifte (35) aus einem elastischen Material hergestellt sind.

3. Brotbackmaschine nach Anspruch 1 oder Anspruch 2,
in welcher jeder der Stoppstifte (35) einen stationären, fest mit der beweglichen Schale (33) gekoppelten Teil (35a) und einen Stoß dämpfenden, aus einem elastischen Material hergestellten und mit dem stationären Teil (35a) gekoppelten Teil (35b) aufweist, welcher den entsprechenden Schalenhalter (40) kontaktiert.

4. Brotbackmaschine nach einem der vorstehenden Ansprüche, zusätzlich aufweisend jeweils in den Schalenhaltern (40) zum Aufnehmen der Schwenkstifte (34) ausgebildete Führungsnuten (42) für Schwenkstifte sowie jeweils in den Schalenhaftern (40) zum Aufnehmen der Stoppstifte (35) ausgebildete Führungsnuten (43) für Stoppstifte, wobei die Schwenkstifte (34) und die Stoppstifte (35) jeweils in der gleichen Höhe Ober einem Boden der beweglichen Schale (33) angeordnet sind, und eine Unterseite einer jeden Führungsnut (43) für Stoppstifte höher liegt als eine Unterseite einer jeden Führungsnut (42) für Schwenkstifte.

5. Brotbackmaschine nach einem der Ansprüche 1 bis 3, zusätzlich aufweisend jeweils in den Schalenhaltem (40) zum Aufnehmen der Schwenkstifte (34) ausgebildete Führungsnuten (42) für Schwenkstifte sowie jeweils in den Schalenhaltern (40) zum Aufnehmen der Stoppstifte (35) ausgebildete Führungsnuten (43) für Stoppstifte, wobei die Schwenkstifte (34) und die Stoppstifte (35) jeweils in der gleichen Höhe über einem Boden der beweglichen Schale (33) angeordnet sind, wobei Unterseiten der Führungsnuten (43) für Stoppstifte und der Führungsnuten (42) für Schwenkstifte in der gleichen Höhe über einem Boden der jeweiligen Schalenhalter (40) angeordnet sind, und wobei die Stoppstifte (35) in den Führungsnuten (43) für Stoppstifte in einem Abstand über den Unterseiten der Führungsnuten (43) für Stoppstifte angeordnet sind, wenn die bewegliche Schale (33) den geschlossenen Zustand herstellt.

6. Brotbackmaschine nach Anspruch 4 oder 5, in welcher dann, wenn die bewegliche Schale (33) den geschlossenen Zustand herstellt, die Stoppstifte (35) mit den Führungsnuten (43) für Stoppstifte zusammentreffen, um einen direkten Kontakt zwischen der stationären Schale (31) und der beweglichen Schale (33) zu verhindern.

7. Brotbackmaschine nach Anspruch 5, in welcher die Führungsnuten (43) für Stoppstifte so angeschrägt sind, dass die Böden der Führungsnuten (43) für Stoppstifte schmaler sind als ihre Oberseiten, und wobei dann, wenn die bewegliche Schale (33) den geschlossenen Zustand herstellt, die Stoppstifte (35) mit den Führungsnuten (43) für Stoppstifte zusammentreffen, um einen direkten Kontakt zwischen der stationären Schale (31) und der beweglichen Schale (33) zu verhindern.

8. Brotbackmaschine nach Anspruch 2, in welcher die Stoppstifte (35) aus einem hitzebeständigen Gummi hergestellt sind.

9. Backschale (30) für eine Brotbackmaschine mit Knettrommeln (11, 12), mit:
einer stationären Schale (31) zwischen den Knettrommeln (11, 12);
Schalenhaltern (40), die jeweils an den Selten der stationären Schale (31) angebracht sind;
einer drehbar auf den Schalenhaltern (40) befestigten beweglichen Schale (33);
Schwenkstiften (34), die jeweils an den Seiten der beweglichen Schale (33) befestigt und von den Schafenhaftem (40) aufgenommen sind, wobei die bewegliche Schale (33) zwischen einem offenen Zustand, in dem die bewegliche Schale (33) einen Abstand von der stationären Schale (31) aufweist, und einem geschlossenen Zustand, in dem die bewegliche Schale (33) der stationären Schale (31) benachbart ist, hin und her gedreht wird; und
Stoppstiften (35), die an den Seiten der beweglichen Schale (33) befestigt sind und die Schalenhalter (40) aufnehmen, um einen vorbestimmten Abstand zwischen der stationären Schale (31) und der beweglichen Schale (33) aufrechtuterhalten, wenn die bewegliche Schale (33) den geschlossenen Zustand herstellt.

10. Backschale (30) nach Anspruch 9, zusätzlich aufweisend jeweils in den Schatenhaltern (40) zum Aufnehmen der Schwenkstifte (34) ausgebildete Führungsnuten (42) für Schwenkstifte sowie jeweils in den Schalenhaltern (40) zum Aufnehmen der Stoppstifte (35) ausgebildete Führungsnuten (43) für Stoppstifte, wobei die Schwenkstifte (34) und die Stoppstifte (35) jeweils In der gleichen Höhe über einem Boden der beweglichen Schale (33) angeordnet sind, und eine Unterseite einer jeden Führungsnut (43) für Stoppstifte höher liegt als eine Unterseite einer jeden Führungsnut (42) für Schwenkstifte.

11. Backschale nach Anspruch 9, zusätzlich aufweisend jeweils in den Schalenhaltern (40) zum Aufnehmen der Schwenkstifte (34) ausgebildete Führungsnuten (42) für Schwenkstifte sowie jeweils in den Schalenhaltem (40) zum Aufnehmen der Stoppstifte (35) ausgebildete Führungsnuten (43) für Stoppstifte, wobei die Schwenkstifte (34) und die Stoppstifte (35) jeweils in der gleichen Höhe über einem Boden der beweglichen Schale (33) angeordnet sind, wobei Unterseiten der Führungsnuten (43) für Stoppstifte und der Führungsnuten (42) für Schwenkstifte in der gleichen Höhe Ober einem Boden der jeweiligen Schalenhalter (40) angeordnet sind, und wobei die Stoppstifte (35) in den Führungsnuten (43) für Stoppsilfte In einem Abstand über den Unterseiten der Führungsnuten (43) für Stoppstifte angeordnet sind, wenn die bewegliche Schale (33) den geschlossenen Zustand herstellt.

12. Backschale gemäß Anspruch 10 oder 11, In welcher dann, wenn die bewegliche Schale (33) den geschlossenen Zustand herstellt, die Stoppstifte (35) jeweils mit den Führungsnuten (43) für Stoppstifte zusammentreffen, um einen direkten Kontakt zwischen der stationären Schale (31) und der beweglichen Schale (33) zu verhindern.

13. Backschale nach einem der Ansprüche 10 bis 12, in welcher die Führungsnuten (43) für Stoppstifte so angeschrägt sind, dass die Böden der Führungsnuten (43) für Stoppstifte schmaler sind als Ihre Oberseiten, und wobei dann, wenn die bewegliche Schale (33) den geschlossenen Zustand herstellt, die Stoppstifte (35) jeweils mit den Führungsnuten (43) für Stoppstifte zusammentreffen, um einen direkten Kontakt zwischen der stationären Schale (31) und der beweglichen Schale (33) zu verhindern.

14. Backschale nach einem der Ansprüche 9 bis 13, in welcher die Stoppstifte (35) aus einem hitzebeständigen Gummi hergestellt sind.

## Revendications

1. Machine de fabrication de pain comprenant :
un corps principal (1) formant un compartiment de four (10);
des tambours de pétrissage (11, 12) espacés l'un de l'autre dans une partie supérieure et une partie inférieure du compartiment de four (10) qui maintiennent les extrémités opposées d'un sac de mélange (50) contenant les ingrédients du pain, respectivement ;
un bac stationnaire (31) agencé entre les tambours de pétrissage (11, 12), un bac mobile (33) faisant face au bac stationnaire (31) afin de former une fente à travers laquelle le sac de mélange (50) passe ;
des supports de bac (40) respectivement attachés aux extrémités du bac stationnaire (31) afin de soutenir le bac mobile (33) ;
des tiges formant pivot (34) respectivement montées sur les extrémités du bac mobile (33) et logées dans les supports de bac (40), le bac mobile (33) pivotant de manière alternée entre une position ouverte, dans laquelle le bac mobile (33) est espacé du bac stationnaire (31), et une position fermée, dans laquelle le bac mobile (33) est adjacent au bac stationnaire (31) ; et
des tiges d'arrêts (35) respectivement montées sur les extrémités du bac mobile (33) et logées dans les supports de bac (40) de façon à maintenir un intervalle prédéterminé entre le bac stationnaire (31) et le bac mobile (33) lorsque le bac mobile (33) se referme.

2. Machine de fabrication de pain selon la revendication 1, dans laquelle les tiges d'arrêt (35) sont faites en un matériau élastique.

3. Machine de fabrication de pain selon la revendication 1 ou la revendication 2, dans laquelle chacune des tiges d'arrêt (35) comprend une partie stationnaire (35a) couplée solidement au bac mobile (33), et une partie absorbant les chocs (35b) constituée d'un matériau élastique, qui est couplée avec la partie stationnaire (35a) et est en contact avec le support de bac respectif (40).

4. Machine de fabrication de pain selon l'une quelconque des revendications précédentes, comprenant en outre des rainures de guidage des tiges formant pivot (42) respectivement formées dans les supports de bac (40) afin de recevoir les tiges formant pivot (34), et des rainures de guidage des tiges d'arrêt (43) respectivement formées dans les supports de bac (40) afin de recevoir les tiges d'arrêt (35), dans laquelle les tiges formant pivot (34) et les tiges d'arrêt (35) sont chacune situées à la même hauteur par rapport à la partie inférieure du bac mobile (33), et une partie inférieure de chaque rainure de guidage de tige d'arrêt (43) est plus haute qu'une partie inférieure de chaque rainure de guidage de tige formant pivot (42).

5. Machine de fabrication de pain selon l'une quelconque des revendications 1-3, comprenant en outre des rainures de guidage des tiges formant pivot (42) formées respectivement dans les supports de bac (40) afin de recevoir les tiges formant pivot (34), et des rainures de guidage des tiges d'arrêt (43) respectivement formées dans les supports de bac (40) afin de recevoir les tiges d'arrêt (35), dans laquelle les tiges formant pivot (34) et les tiges d'arrêt (35) sont chacune situées à la même hauteur par rapport à la partie inférieure du bac mobile (33), les parties inférieures des rainures de guidage des tiges d'arrêt (43) et des rainures de guidage des tiges formant pivot (42) sont situées à la même hauteur par rapport à la partie inférieure des supports de bac respectifs (40), et les tiges d'arrêt (35) sont logées dans les rainures de guidage des tiges d'arrêt (43) à une certaine distance des parties inférieures des rainures de guidage des tiges d'arrêt (43) lorsque le bac mobile (33) est fermé.

6. Machine de fabrication de pain selon la revendication 4 ou la revendication 5, dans laquelle lorsque le bac mobile (33) se referme, les tiges d'arrêt (35) rejoignent les rainures de guidage des tiges d'arrêt (43) pour empêcher le contact direct entre le bac stationnaire (31) et le bac mobile (33).

7. Machine de fabrication de pain selon la revendication 5, dans laquelle les rainures de guidage des tiges d'arrêt (43) sont effilées, les parties inférieures des rainures de guidage des tiges d'arrêt (43) étant plus étroites que leurs parties supérieures, et dans laquelle lorsque le bac mobile (33) se referme, les tiges d'arrêt (35) rejoignent les rainures de guidage des tiges d'arrêt (43) pour empêcher le contact direct entre le bac stationnaire (31) et le bac mobile (33).

8. Machine de fabrication de pain selon la revendication 2, dans laquelle les tiges d'arrêt (35) sont constituées d'un caoutchouc thermorésistant.

9. Bac de cuisson (30) pour une machine de fabrication de pain ayant des tambours de pétrissage (11, 12), comprenant :
un bac stationnaire (31) agencé entre les tambours de pétrissage (11, 12) ;
des supports de bac (40) respectivement attachés aux extrémités du bac stationnaire (31) ;
un bac mobile (33) monté de manière rotative sur les supports de bac (40) ;
des tiges formant pivot (34) respectivement montées sur les extrémités du bac mobile (33) et logés dans les supports de bac (40), le bac mobile (33) pivotant de manière alternée entre une position ouverte, dans laquelle le bac mobile (33) est espacé du bec stationnaire (31), et une position fermée, dans laquelle le bac mobile (33) est adjacent au bac stationnaire (31); et
des tiges d'arrêts (35) respectivement montées sur les extrémités du bac mobile (33) et logées dans les supports de bac (40) de façon à maintenir un intervalle prédéterminé entre le bac stationnaire (31) et le bac mobile (33) lorsque le bac mobile (33) se referme.

10. Bac de cuisson (30) selon la revendication 9, comprenant en outre des rainures de guidage des tiges de pivot (42) respectivement formées dans les supports de bac (40) afin de recevoir les tiges de pivot (34), et des rainures de guidage des tiges d'arrêt (43) respectivement formées dans les supports de bac (40) afin de recevoir les tiges d'arrêt (35), dans lequel les tiges de pivot (34) et les tiges d'arrêt (35) sont chacune situées à la marne hauteur par rapport à la partie inférieure du bac mobile (33), et une perde inférieure de chaque rainure de guidage de tige d'arrêt (42) est plus haute qu'une partie inférieure de chaque rainure de guidage de tige de pivot (43).

11. Bac de cuisson selon la revendication 9, comprenant en outre des rainures de guidage des tiges de pivot (42) formées respectivement dans les supports de bac (40) afin de recevoir les tiges de pivot (34), et des rainures de guidage des tiges d'arrêt (43) respectivement formées dans les supports de bac (40) afin de recevoir les tiges d'arrêt (35), dans lequel les tiges de pivot (34) et les tiges d'arrêt (35) sont chacune situées à la même hauteur par apport à la partie inférieure du bac mobile (33), les parties inférieures des rainures de guidage des tiges d'arrêt (43) et des rainures de guidage des tiges de pivot (42) sont situées à la même hauteur par rapport à la partie inférieure des supports de bac repectifs (40), et les tiges d'arrêt (35) sont logées dans les rainures de guidage des tiges d'arrêt (43) à une distance des parties inférieures des rainures de guidage des tiges d'arrêt (43) lorsque le bac mobile (33) est fermé.

12. Bac de cuisson selon la revendication 10 ou la revendication 11, dans lequel lorsque le bac mobile (33) se referme, les tiges d'arrêt (35) rejoignent respectivement les rainures de guidage des tiges d'arrêt (43) pour empêcher un contact direct entre le bac stationnaire et le bac mobile.

13. Bac de cuisson selon l'une quelconque des revendications 10-12, dans lequel les rainures de guidage des tiges d'arrêt (43) sont effilées la partie inférieure de chaque rainure de guidage de tige d'arrêt (43) étant plus étroite que sa partie supérieure, et dans lequel lonque le bac mobile (33) se referme, les tiges d'arrêt (35) rejoignent respectivement les rainures de guidage des tiges d'arrêt (43) pour empêcher un contact direct entre le bac stationnaire (31) et le bac mobile (33).

14. Bac de cuisson selon l'une quelconque des revendications 9-13, dans lequel les tiges d'arrêt (35) sont faites en un caoutchouc thermorésistant.
